# EUROPEAN PATENT APPLICATION

(11) **EP 3 171 008 A1**
(43) Date of publication of application: **24.05.2017**
(21) Application number: 16199120.3
(22) Date of filing: 16.11.2016
(51) Int. Cl.: F02K 1/76

(54) **THRUST REVERSE FEATURE CONTROL**

(30) Priority: 20.11.2015 US 201514946933
(71) Applicant: General Electric Company, Schenectady, NY 12345 (US)
(72) Inventor: MILLER, Brandon Wayne, Cincinnati, OH 45215 (US); FRANER, Matthew Timothy, Cincinnati, OH 45215 (US); LU, Manxue, Lynn, MA 01910 (US)
(74) Representative: Williams, Andrew Richard

(57) **Abstract**

A method 300 for controlling a gas turbine engine 10 includes receiving 302, with a controller, a thrust reverse command to activate a thrust reverse feature of the gas turbine engine. The method also includes determining 304 the thrust reverse feature is in a starting position, confirming 306 a gas turbine engine condition is at a first value, and moving 308 the thrust reverse feature to a middle position. The method also includes confirming 310 the gas turbine engine condition is at a second value in coordination with moving the thrust reverse feature to the middle position. Additionally, after moving the thrust reverse feature to the middle position and confirming the gas turbine engine condition is that a second value in coordination with such movement, the method includes moving 312 the thrust reverse feature to a maximum position.

## Description

### FIELD

The current disclosure pertains to a control system for a thrust reverse feature of a gas turbine engine.

### BACKGROUND

In some fan engines (also known as "propfan" engines), the axis of the fan propeller is parallel to or coaxial with the axis of the gas engine. Typically, in a turbo-shaft, turbo-propeller engine, the axis of one or more propellers will be perpendicular to the axis of the gas engine. In both configurations, the fan or propeller may have a fixed pitch or a variable pitch. If the pitch is variable, the engine may also have a dedicated pitch change mechanism (PCM). The propeller speed (Nx) is proportional to the gas engine power turbine shaft speed (Np) via a pure mechanical gear-train transformation, that is, Nx = Kgb * Np where Kgb is a constant that represents the gear ratio. Controlling the propeller speed, Nx, is equivalent to controlling the power turbine speed, Np. The primary challenge is to coordinate control of the propeller speed (Nx) or the Power Turbine speed (Np) (denoted generically as Nx due to their relationship with each other), the HP shaft speed (N2), and any PCM pitch angle while maintaining a set of active constraints including but not limited to core pressure (Px), exhaust temperature (T), core speed rate (N2dot), and/or torque (Tq) to stay with defined limits, while rejecting external disturbances including but not limited to load change and/or internal known disturbances including but not limited to variable bleed valves and variable stator vanes.

Further, certain gas turbine engines include a thrust reverse feature for redirecting a flow of air through or around the engine to generate a reverse thrust. Typically, the thrust reverse feature is moved from a stowed position directly to a fully deployed position once a certain condition or conditions are met, such as propeller speed Nx or HP shaft speed N2. However, such control over simplifies the process and can result in a slower activation of the thrust reverser/ a longer wait time for the engine to generate a maximum amount of reverse thrust. Accordingly, a control system that can more appropriately activate a thrust reverse feature of a gas turbine engine in coordination with controlling other aspects of the engine would be useful.

### BRIEF DESCRIPTION

Aspects and advantages of the invention will be set forth in part in the following description, or may be obvious from the description, or may be learned through practice of the invention.

In one exemplary aspect of the present disclosure, a method for controlling a gas turbine engine is provided. The method includes receiving, with a controller, a thrust reverse command to activate a thrust reverse feature of the gas turbine engine, and determining the thrust reverse feature is in a starting position. The method also includes confirming a gas turbine engine condition is at a first value, moving the thrust reverse feature to a middle position based on a thrust reverse feature coordination schedule, and confirming the gas turbine engine condition is at a second value in coordination with moving the thrust reverse feature to the middle position. The method also includes moving the thrust reverse feature to a maximum position based on the thrust reverse feature coordination schedule.

In one exemplary aspect of the present disclosure, a gas turbine engine defining an axial direction is provided. The gas turbine engine includes a core having a compressor and a turbine located downstream of the compressor. The gas turbine engine also includes a thrust reverse feature defining a starting position, a middle position, and a maximum position. The thrust reverse feature is configured for redirecting a flow of air through the core or around the core when in the maximum position. The gas turbine engine also includes a controller operably connected to the core and the thrust reverse feature. The controller is configured to receive a thrust reverse command to activate the thrust reverse feature of the gas turbine engine, determine the thrust reverse feature is in the starting position, and confirm a gas turbine engine condition is at a first value. The controller is also configured to move the thrust reverse feature to the middle position, and confirm the gas turbine engine condition is at a second value in coordination with moving the thrust reverse feature to the middle position. The controller is also configured to move the thrust reverse feature to the maximum position.

These and other features, aspects and advantages of the present invention will become better understood with reference to the following description and appended claims. The accompanying drawings, which are incorporated in and constitute a part of this specification, illustrate aspects of the invention and, together with the description, serve to explain the principles of the invention.

### BRIEF DESCRIPTION OF THE FIGURES

A full and enabling disclosure of the present invention, including the best mode thereof, directed to one of ordinary skill in the art, is set forth in the specification, which makes reference to the appended Figs.
FIG. 1 is a cross-sectional, schematic view of a gas turbine engine in accordance with an exemplary aspect of the present disclosure.
FIG. 2 is a cross-sectional, schematic view of the exemplary gas turbine engine of FIG. 1, having a thrust reverse feature in a deployed position.
FIG. 3 is a flow diagram of a control system in accordance with an exemplary embodiment of the present disclosure.
FIG. 4 is a schematic view of a control system in accordance with another exemplary embodiment of the present disclosure.
FIG. 5 is a flow diagram of a method for controlling a gas turbine engine in accordance with an exemplary aspect of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The terms "upstream" and "downstream" refer to the relative direction with respect to fluid flow in a fluid pathway. For example, "upstream" refers to the direction from which the fluid flows, and "downstream" refers to the direction to which the fluid flows.

The current disclosure generally provides for a method of controlling a gas turbine engine to coordinate movement of a thrust reverse feature of the gas turbine engine with various other gas turbine engine conditions. Coordinating the movement of the thrust reverse feature with the various other gas turbine engine conditions may generally have the technical effect of improved control of the gas turbine engine. For example, such coordination may provide for less stress on the thrust reverse feature, as well as for a quicker full utilization of the thrust reverse feature (i.e., an increased amount of reverse thrust more quickly).

In certain exemplary aspects, the thrust reverse feature may generally be movable from a starting position to a maximum position, along with one or more middle positions therebetween. The starting position may be a fully stowed position in which no reverse thrust is generated and the maximum position may be a fully deployed position wherein a maximum amount of reverse thrust may be generated during operation of the gas turbine engine. The thrust reverse feature may be positioned in the starting position when a controller operable with the thrust reverse feature receives a thrust reverser command. In response to receiving the thrust reverser command, the controller may further be configured to move one or more gas turbine engine conditions to a first value corresponding to a desired first value for initiating the thrust reverse feature. The one or more gas turbine engine conditions may include a gas turbine engine speed, a fan speed of a fan of the gas turbine engine, a pitch angle of a plurality of fan blades of the fan of the gas turbine engine, etc. For example, wherein the gas turbine engine condition is a gas turbine engine speed or fan speed, the controller may reduce such engine speed and/or fan speed to a relatively low rotational speed. Additionally, wherein the gas turbine engine condition is a pitch angle, the controller may reduce the pitch angle such that the fan generates a relatively low amount of forward thrust.

Further, after receiving the thrust reverser command and determining the thrust reverse feature is in a starting position and the gas turbine engine condition is at a first value, the controller may coordinate movement of the thrust reverse feature to a middle position along with the gas turbine engine condition to a second value corresponding to a desired value for the thrust reverse feature being at the middle position. For example, wherein the gas turbine engine condition is a gas turbine engine speed or fan speed, the controller may reduce the gas turbine engine speed and/or fan speed to a relatively low rotational speed/a minimum rotational speed. Additionally, wherein the gas turbine engine condition is a pitch angle, the controller may reduce the pitch angle below a fine flight limit for the gas turbine engine.

Moreover, in certain exemplary aspects, after the thrust reverse feature has moved to the middle position and the gas turbine engine condition is at the second value, the controller may further coordinate movement of the thrust reverse feature to the maximum position along with the gas turbine engine condition to a third value corresponding to a desired value for the thrust reverse feature being at the maximum position. For example, wherein the gas turbine engine condition is an engine speed or fan speed, the controller may increase the engine speed and/or fan speed to provide additional airflow through the thrust reverse feature, and thus to generate more reverse thrust. Additionally, wherein the gas turbine engine condition is a pitch angle, the controller may further reduce the pitch angle such that the fan generates reverse thrust as well.

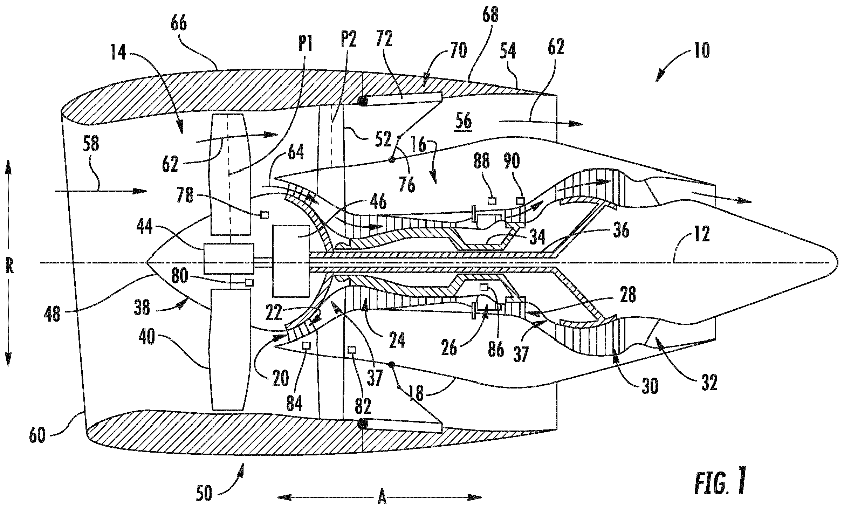

Notably, in certain exemplary aspects, the controller may receive a number of other additional variables to determine the thrust reverse feature position. For example, in certain exemplary aspects, the controller may coordinate movement of the thrust reverse feature with a plurality of the engine conditions noted above, in addition to, or alternatively to, a power lever angle, a Mach number for the gas turbine engine, etc. Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. The turbofan engine 10 may also define a circumferential direction (not shown) extending circumferentially about the axial direction A. In general, the turbofan 10 includes a fan section 14 and a core turbine engine 16 disposed downstream from the fan section 14.

The exemplary core turbine engine 16 depicted is generally enclosed within a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The compressor section, combustion section 26, turbine section, and nozzle section 32 together define a core air flowpath 37 therethrough.

For the embodiment depicted, the fan section 14 includes a variable pitch fan 38 having a plurality of fan blades 40. The fan blades 40 are attached at a base to a disk 42, the fan blades 40 and disk 42 together rotatable about the longitudinal axis 12 by the LP shaft 36 across a power gear box 46. The power gear box 46 includes a plurality of gears for stepping down a rotational speed of the LP shaft 36 to a more efficient rotational fan speed. Additionally, the plurality of fan blades 40 are each rotatable about a respective pitch axis P1 by a pitch change mechanism 44. The pitch change mechanism 44 may include one or more rotary or linear actuators for changing a pitch of each of the respective fan blades 40.

Referring still to the exemplary embodiment of FIG. 1, the disk 42 is covered by rotatable front hub 48 aerodynamically contoured to promote an airflow through the plurality of fan blades 40. Additionally, the exemplary turbofan engine 10 includes an annular nacelle assembly 50 that circumferentially surrounds the fan 38 and/or at least a portion of the core turbine engine 16. The nacelle assembly 50 generally includes a fan cowl 66 and a trans-cowl 68 located aft of the fan cowl 66. The exemplary nacelle assembly 50 depicted is supported relative to the core turbine engine 16 by a plurality of circumferentially-spaced outlet guide vanes 52. The outlet guide vanes 52 depicted are variable pitch outlet guide vanes rotatable about respective OGV pitch axes P2. Notably, the outlet guide vanes 52 may be sized, shaped, and configured to impart a counteracting swirl to the fluid so that in a downstream direction aft of the fan blades 40 and outlet guide vanes 52 the fluid has a greatly reduced degree of swirl, which translates to an increased level of efficiency. A bypass airflow passage 56 is defined between the nacelle assembly 50 and the core 16.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the core air flowpath 37. The ratio between the first portion of air 62 and the second portion of air 64 is commonly known as a bypass ratio.

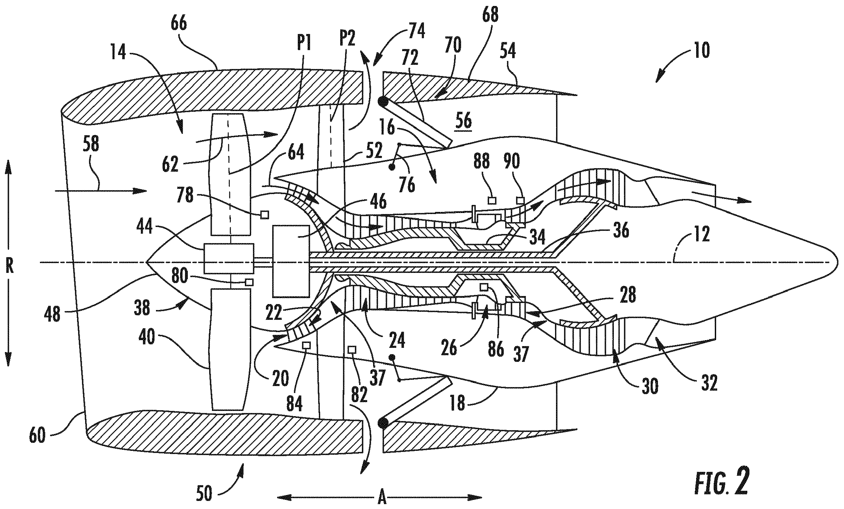

Referring now also to FIG. 2, it will be appreciated that the exemplary turbofan engine 10 depicted further includes a thrust reverse feature 70 for generating an amount of reverse thrust during certain operating conditions. FIG. 1 depicts the exemplary thrust reverse feature 70 in a fully stowed position and FIG. 2 depicts the exemplary thrust reverse feature 70 in a fully deployed position. The thrust reverse feature 70 is configured generally as a plurality of blocker doors 72 rotatably connected to a portion of the nacelle assembly 50. More particularly, for the embodiment depicted, the trans-cowl 68 is movable along the axial direction A of the turbofan engine 10 relative to the fan cowl 66 between a forward position (FIG. 1) and an aft position (FIG. 2). When in the aft position, an annular opening 74 is defined between the trans-cowl 68 and the fan cowl 66. Additionally, for the embodiment depicted, the blocker doors 72 are also linked to the core via one or more drag links 76. Accordingly, moving the trans-cowl 68 aftwardly to the aft position correspondingly moves the blocker doors 72 of the thrust reverse feature 70 into the bypass passage 56, redirecting an airflow through the bypass passage 56 through the opening 74 defined between the fan cowl 66 and trans-cowl 68. Once the blocker doors 72 are in this fully deployed position, the redirected airflow from the bypass passage 56 may generate an amount of reverse thrust.

Referring still to FIGS. 1 and 2, the exemplary turbofan engine 10 may include one or more sensors to determine certain operating parameters/conditions of the turbofan engine 10. For example, a fan speed, or LP shaft speed, N1, i.e., a rotational speed of the fan 38 or LP shaft 36, may be measured by a speed sensor 78 on the LP shaft 36 or in the fan 38. Additionally, a pitch angle, or beta-angle, B1 of the plurality of fan blades 40 may be measured by a beta angle sensor 80, and a pitch angle, or beta-angle, B2 of the outlet guide vanes 52 may be measured by a beta angle sensor 82. Further, an inlet temperature T1 within the inlet 20 of the core 16 may be measured by an inlet temperature sensor 84; a speed of the HP shaft 34, or a gas turbine engine speed, N2, may be measured by a speed sensor 86; a temperature T3 of the combustor/ combustion section 26 may be measured by a combustor temperature sensor 88; and a temperature T4 of the HP turbine 28 may be measured by an HP turbine temperature T4 sensor 90.

Each of these sensors is in communication with one or more controllers (not depicted). The one or more controllers may include a computer or other suitable processing unit. The controller may include suitable computer-readable instructions that, when implemented, configure the controller to perform various functions, such as receiving, transmitting and/or executing signals from the sensors. A computer generally includes a processor(s) and a memory. The processor(s) can be any known processing device. Memory can include any suitable computer-readable medium or media, including, but not limited to, RAM, ROM, hard drives, flash drives, or other memory devices. Memory stores information accessible by the processor(s), including instructions that can be executed by the processor(s). The instructions can be any set of instructions that when executed by the processor(s), cause the processor(s) to provide a desired functionality. For instance, the instructions can be software instructions rendered in a computer-readable form. When software is used, any suitable programming, scripting, or other type of language or combinations of languages may be used to implement the teachings contained herein. Alternatively, the instructions can be implemented by hardwired logic or other circuitry, including, but not limited to application-specific circuits. The computing device can include a network interface for accessing information over a network. The network can include a combination of networks, such as Wi-Fi network, LAN, WAN, the Internet, cellular network, and/or any other suitable network and can include any number of wired or wireless communication links. For instance, computing device could communicate through a wired or wireless network with each sensor and other systems of the engine (e.g., the engine logic control).

It should be appreciated, however, that the exemplary turbofan engine 10 depicted in FIGS. 1 and 2 is by way of example only, and that in other exemplary embodiments, the turbofan engine 10 may have any other suitable configuration. For example, in other exemplary embodiments, any other suitable thrust reverse feature 70 may be included. For example, in other exemplary embodiments, the thrust reverse feature 70 may include any suitable cold stream thrust reverse feature 70 for reversing a flow of air around the core 16 through the bypass passage 56, and/or any other suitable hot stream thrust reverse feature 70 for reversing a flow of air through the core 16. Moreover, in other exemplary embodiments, aspects of the present disclosure may be incorporated into any other suitable gas turbine engine, such as a suitable turboprop engine, turboshaft engine, turbojet engine, etc.

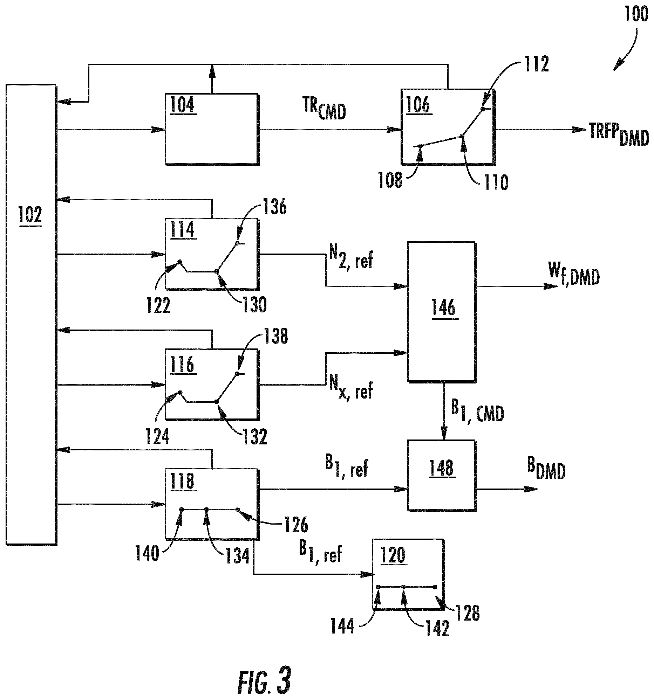

Referring now to FIG. 3, a flow chart is provided of an exemplary control system 100 for controlling a gas turbine engine. For example, in certain exemplary embodiments, the exemplary control system 100 depicted may be configured to control the exemplary turbofan engine 10 described above with reference to FIGS. 1 and 2, implemented through the controller described above with reference to FIGS. 1 and 2. However, in other exemplary embodiments, the exemplary control system 100 depicted in FIG. 3 may instead be configured to control any other suitable gas turbine engine, and/or implemented by any other suitable controller.

The exemplary control system 100 generally includes a parameter interface module 102. The parameter interface module 102 may include one or more separate modules configured to receive or determine various condition/ parameter values of the gas turbine engine. For example, the parameter interface module 102 may be operably connected with one or more sensors, such as speed sensors, temperature sensors, pressure sensors, position sensors, etc., to receive engine condition/ parameter values and/or to derive a desired engine condition/parameter value. In certain exemplary embodiments, the parameter interface module 102 may be configured to receive and/or determine the following engine conditions: a power lever angle (PLA), a Mach number for an aircraft to which the gas turbine engine is installed, a gas turbine combustor temperature T3, a gas turbine engine turbine temperature T4, a gas turbine engine speed N2, a fan speed N1 of a fan of the gas turbine engine, a pitch angle B1 of a plurality of fan blades of the fan, a pitch angle B2 of one or more outlet guide vanes of the gas turbine engine, etc.

The exemplary control system 100 additionally includes a thrust reverse command module 104. The thrust reverse command module 104 may be configured to receive one or more parameters and, based at least in part on these parameters, confirm a thrust reverse command. For example, a pilot or other operator of an aircraft may initiate a thrust reverse command, such command may be received by the thrust reverse command module 104, and the thrust reverse command module 104 may, based on the one or more parameters received, confirm such thrust reverse command. Alternatively, the thrust reverse command module 104 may automatically initiate and/or confirm a thrust reverse command based on the one or more parameter values received. In certain exemplary embodiments, the thrust reverse command module 104 may receive from the parameter interface module 102 one or more of the PLA, Mach number, turbine temperature T4, and turbine engine speed N2.

The thrust reverse command module 104 may provide the confirmed thrust reverse command TR_{CMD} to a thrust reverse feature position module 106. The thrust reverse feature position module 106 may work in coordination with various other modules, described below, to provide a thrust reverse feature position demand TRFP_{DMD} to a thrust reverse feature. More particularly, the thrust reverse feature position module 106 may actuate the thrust reverse feature between, e.g., a starting position 108, a middle position 110, and a maximum position 112 to implement the thrust reverse command TR_{CMD} received. The thrust reverse feature may include any feature of the gas turbine engine configured to, e.g., redirect a flow of air through or around a core of the gas turbine engine to generate an amount of reverse thrust. For example, the thrust reverse feature may be configured as the exemplary thrust reverse feature 70 described above with reference to FIGS. 1 and 2. Accordingly, the starting position 108 of the thrust reverse feature may correspond to a fully stowed position and the maximum position 112 may correspond to a fully deployed position. Additionally, the middle position 110 may be some position of the thrust reverse feature between the starting position 108 and maximum position 112 wherein less than a maximum amount of reverse thrust is generated by the thrust reverse feature, and where the thrust reverse feature is already aligned for redirecting at least minimum air flow in thrust reverse direction. The thrust reverse feature position module 106, as depicted, may receive the thrust reverse command TR_{CMD} from the thrust reverse command module 104, as well as one or more additional parameters from the parameter interface module 102. For example, in at least certain exemplary embodiments, the thrust reverse feature position module 106 may additionally receive a PLA, Mach number, gas turbine engine speed N2, blade pitch angle B1, etc. The thrust reverse feature position module 106 may control the position of the thrust reverse feature based at least in part on these additional gas turbine engine conditions.

Referring still to FIG. 3, the exemplary control system 100 additionally includes a gas turbine engine speed module 114, a gas turbine fan speed module 116, a gas turbine blade angle module 118, and an outlet guide vane (OGV) angle module 120. Each of these modules are operably connected to the parameter interface module 102, such that each of the modules may receive various engine parameter values/ engine condition values and return reference values to the parameter interface module 102. For example, the gas turbine engine speed module 114 and fan speed module 116 may each receive a PLA value, Mach number, and turbine temperature T4. Additionally, in certain embodiments, the blade angle module 118 may receive a Mach number and PLA value, as well as one or more of the gas turbine engine speed N2 and gas turbine fan speed N1

(from the engine speed module 114 and fan speed module 116). Further, the OGV control module 120 may receive a PLA value along with, e.g., a blade angle reference value B1_{REF} from the blade angle module 118.

Furthermore, each of the gas turbine engine speed module 114, gas turbine fan speed module 116, gas turbine blade angle module 118, and OGV module 120 may additionally receive the thrust reverse command TR_{CMD} from the thrust reverse command module 104 and/or a thrust reverse feature position from the thrust reverse feature position module 106. As briefly discussed above, the exemplary control system 100 is configured to coordinate movement of the thrust reverse feature with various other gas turbine engine conditions. More specifically, in at least certain exemplary aspects, the exemplary control system 100 may be configured to control the thrust reverse feature position through the thrust reverse feature position module 106 as a function of the thrust reverse command TR_{CMD} and one or more of PLA, Mach number, blade angle B1, gas turbine engine speed N2, fan speed N1 etc. (Thrust reverse feature position = f(TR_{CMD}, PLA, Mach number, blade angle B1, engine speed N2, and/or fan speed N1)).

Referring particularly to the exemplary aspect of the control system 100 depicted, the thrust reverse command module 104 may confirm a thrust reverse command and provide such command TR_{CMD} to the thrust reverse feature position module 106. Such thrust reverse feature position module 106 may determine the thrust reverse feature is in the starting position 108. Simultaneously, or in coordination with such determination, the control system 100 may control one or more of the other control system 100 modules to move various engine conditions to values corresponding to a desired value for initiating the thrust reverse feature. For example, the control system 100 may move the gas turbine engine speed N2 to a first engine speed value 122, move the fan speed N1 to a first fan speed value 124, move the blade angle B1 to a first blade angle value 126, and move the OGV angle B2 to a first OGV angle value 128. More particularly, moving the gas turbine engine speed N2 and fan speed N1 to the first values 122, 124 may include slowing down the gas turbine engine and fan such that less air is flowing through the core of the gas turbine engine or around the core of the gas turbine engine. Similarly, moving the blade angle B1 to the first value 126 may reduce a forward thrust generated by the fan of the gas turbine engine along with an amount of airflow generated by the fan through the core and/or over the core of the gas turbine engine (i.e., through a bypass passage).

Once the control system 100 confirms the various engine conditions are at the first values corresponding with a desired position for such engine conditions when the gas turbine engine initiates the thrust reverse command, the thrust reverse feature position module 106 may move the thrust reverse feature from the starting position 108 to the middle position 110. Again, the control system 100 may simultaneously, or in coordination with such movement, control one or more of the other control system 100 modules such that the respective engine conditions are at a second value-the second value corresponding to a desired value for such conditions when the thrust reverse feature is in/moved to the middle position 110. For example, the gas turbine engine speed module 114 may confirm the gas turbine engine speed N2 is at a second engine speed value 130 and the fan speed module 116 may confirm the fan speed N1 is at a second fan speed value 132. Notably, for the aspect depicted, the second values 130, 132 of the engine speed N2 and fan speed N1 may be less than the first values 122, 124 of the engine speed N2 and fan speed N1 (i.e., the engine speed module 114 and fan speed module 116 may reduce the engine speed N2 and fan speed N1 to a minimum rotational speed). Additionally, the blade angle module 118 may move the pitch angle B1 of the plurality of fan blades from the first blade angle value 126 to a second blade angle value 134 in coordination with movement of the thrust reverse feature position to the middle position 110. Notably, for the aspect depicted, moving the pitch angle B1 of the plurality fan blades from the first value 126 to the second value 134 includes reducing the pitch angle B1 of the plurality fan blades below a fine flight limit for the fan. The fine flight limit of the fan is specified as the minimum positive fan blade pitch angle for forward thrust. Additionally, for the aspect depicted, moving the pitch angle B1 of the plurality of fan blades from the first value 126 to the second value 134 includes reducing the pitch angle B1 of the plurality of fan blades to an angle below zero (which should at least correspond to a minimum reverse thrust of the fan).

Once the control system 100 confirms the various engine conditions are at the second values corresponding with the desired position for such conditions when the thrust reverse feature is in the second position, the thrust reverse feature position module 106 may move the thrust reverse feature from the middle position 110 to the maximum position 112. Again, the control system 100 may simultaneously, or in coordination with such movement, control one or more of the control system 100 modules such that the engine conditions are at a third value-such third value corresponding to a desired value for such engine conditions when the thrust reverse feature is moved to the maximum position 112. For example, the gas turbine engine speed module 114 may move the engine speed N2 to a third engine speed value 136 and the fan speed module 116 may similarly move the fan speed N1 to a third fan speed value 138. For the aspect depicted, the third values 136, 138 of the engine speed N2 and fan speed N1 are greater than the first values 122, 124 and second values 130, 132. Specifically, for the aspect depicted, when the thrust reverse feature is in the maximum position 112, an increased amount of air is desired through the core or over the core to maximize an amount of reverse thrust generated by the engine. Additionally, the blade angle module 118 may move the pitch angle B1 of the plurality fan blades from the second blade angle value 134 to the third blade angle value 140 in coordination with the movement of the thrust reverse feature position to the maximum position 112. The third value 140 of the pitch angle B1 should be less than the second values 126, 134, corresponding to a maximum reverse thrust position for the fan.

In addition to controlling the above modules, the control system 100 may also coordinate movement of the OGV angle B2 between the first OGV angle value 128, a second OGV angle value 142, and a third OGV angle 144 via the OGV module 120 to, e.g., reducing the amount of noise generated by the gas turbine engine.

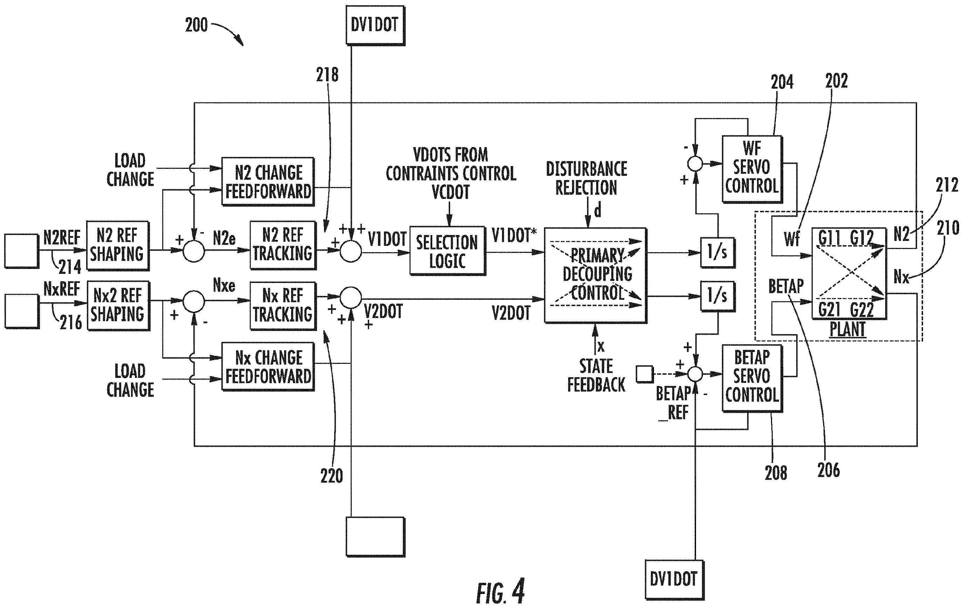

Referring still to FIG. 3, certain of the modules may control a value of a respective engine condition by providing reference values to be used in controlling certain aspects of the gas turbine engine. For example, as depicted, the gas turbine engine speed module 114 may provide an engine speed reference value N2_{REF} to a core speed and fan speed control module 146, and the fan speed module 116 may similarly provide a fan speed reference value N1_{REF} to the core speed and fan speed control module 146. The core speed and fan speed control module 146 may control the engine speed N2 and fan speed N1 to the desired values indicated by the received reference values N2_{REF}, N1_{REF}. By way of example, such control may be similar to the exemplary control system 200 described below with reference to FIG. 4. Generally, the core speed and fan speed control module 146 may manipulate a fuel flow (Wf) to the gas turbine engine, and command the pitch angle B1 of the plurality fan blades. More specifically, for the aspect depicted, the core speed and fan speed control module 146 may provide a fuel flow demand Wf_{DMD} and a pitch angle command B1_{CMD}, which is in turn provided to a pitch angle control module 148. The pitch angle module 148 may, in turn, receive the pitch angle command B1_{CMD} or a pitch angle reference B1_{REF} from the pitch angle module 118 based on control logic, and provide a pitch angle demand B1_{DMD}.

It should be appreciated, however, that the exemplary control system 100 depicted in FIG. 3 is provided by way of example only, and that in other exemplary aspects, the exemplary control system 100 may be configured in any other suitable manner. For example, in certain exemplary aspects, the exemplary control system 100 may be utilized with a gas turbine engine not including one or more of the components corresponding to the control modules depicted. For example, in certain example aspects, the exemplary control system 100 may be utilized with a gas turbine engine not including a variable pitch fan, in which case the control system 100 may not include the pitch angle module 118. Additionally, or alternatively, in certain exemplary aspects, the exemplary control system 100 may be utilized with a non-geared gas turbine engine (i.e., a gas turbine engine not including a power gearbox), in which case the control system 100 may not include the fan speed module 116, and instead may include an LP shaft speed module. Further, in still other aspects, the exemplary control system 100 depicted may include other control modules not described herein or depicted.

Referring now to FIG. 4, a control system 200 for a gas turbine engine in accordance with an exemplary embodiment of the present disclosure is provided. The exemplary control system 200 may be used to control, e.g., a gas turbine engine speed N2 and/or a gas turbine fan speed N1, described above with reference to FIG. 3. For example, the control system 200 depicted may be configured as the core speed and fan speed control module 146 described above with reference to FIG 3.

Specifically, FIG. 4 provides an example of a generic control system 200 for an embodiment of a variable pitch fan engine or turbo-shaft, turbo-propeller engine. The control system 200 depicted may be similar to the exemplary control system described in U.S. Application Serial Number 14/886,169 (filed October 19, 2015) and U.S. Application Serial Number 14/830,914 (filed August 20, 2015), each assigned to the assignee of the present application and incorporated herein fully by reference for all relevant discussions. As discussed in these applications and depicted in FIG. 4, the control inputs are fuel flow (Wf) 202 from a fuel actuator (integrated into a fuel flow servo control 204) and a pitch change mechanism (PCM) pitch angle (BetaP) 206 from a PCM actuator (integrated into a PCM pitch angle B1 servo control 208). The other variable geometries (VG) are considered as known disturbance inputs. One of the controlled outputs 210 may be either the propeller speed/fan speed (Nx) or the LP shaft speed (Ny) based on the relationship Nx = Kgb * Ny and denoted as Nx. A second controlled output 212 may be any of an engine core speed (N2), engine pressure ratio (EPR) and engine torque (Tq). For clarity and brevity, the controlled outputs 210, 212 presented herein for the following formulation are Nx (first controlled output 210) and N2 (second controlled output 212). Typical constraints for the control methodology may include minimum and maximum limits such as, but not limited to: minimum pressure limit (MinPx), maximum pressure limit (MaxPx), maximum temperature limit (MaxT), maximum torque limit (MaxTq), minimum speed rate limit (MinN2dot), and maximum speed rate limit (MaxN2dot).

The controlled outputs 210, 212 N2 and Nx form the basis of feedback loops in the control system 200. These feedback signals are combined with shaped (or filtered) references denoted as N2Ref 214 and NxRef 216. The combinations of the feedback signals and the shaped references N2Ref and NxRef form tracking error signals 218, 220. The tracking error signals 218, 220 may go through reference tracking single-input single-output (SISO) controls then be combined with feed forward control actions that result from accounting for the effects of aerodynamic loading changes on the controlled outputs 210, 212 (Nx and N2).

It should be appreciated, however, that in other exemplary embodiments any other suitable control systems may be utilized for controlling, e.g., fan speed N1 and/or engine speed N2.

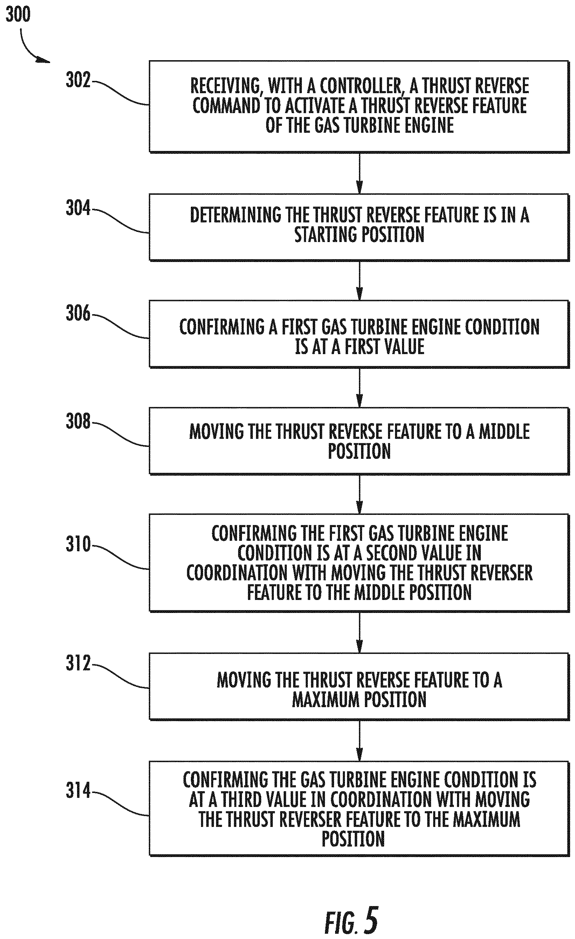

Referring now to FIG. 5, a flowchart of a method (300) for controlling a gas turbine engine in accordance with an exemplary aspect of the present disclosure is provided. The exemplary method (300) may incorporate or utilize the exemplary control system 100 described above with reference to FIG. 3.

As depicted, the exemplary method (300) generally includes at (302) receiving, with a controller, a thrust reverse command to activate a thrust reverse feature of the gas turbine engine. In response to receiving the thrust reverse command at (302), the exemplary method (300) includes at (304) determining the thrust reverse feature is in a starting position. Determining the thrust reverse feature is in the starting position at (304) may include sensing a position of the thrust reverse feature with a sensor.

Moreover, the exemplary method (300) additionally includes at (306) confirming a first gas turbine engine condition is at a first value. In certain exemplary embodiments, confirming the first gas turbine engine condition is at the first value at (306) may include moving the first gas turbine engine condition to the first value. Additionally, in certain exemplary aspects, the first gas turbine engine condition may be any gas turbine engine condition desirably moved in coordination with the thrust reverse feature when the thrust reverse feature is activated. For example, in certain exemplary aspects, the first gas turbine engine condition may be an engine speed, a fan speed, a pitch angle of a plurality of fan blades, etc.

Referring still to FIG. 5, the exemplary method (300) includes at (308) moving the thrust reverse feature to a middle position based on a thrust reverse feature coordination schedule and at (310) confirming the first gas turbine engine condition is at a second value in coordination with moving the thrust reverser feature to the middle position at (308). Notably, moving the thrust reverser feature to the middle position at (308) may include moving the thrust reverser feature to the middle position after confirming the first gas turbine engine condition is at the first value at (306). Additionally, confirming the gas turbine engine condition is at the second value may include moving the gas turbine engine condition to the second value from the first value. As used herein, moving a first component "in coordination with" another component refers to movement of the two components simultaneously, sequentially, or in a stepwise manner. Additionally the thrust reverse feature coordination schedule may refer to a schedule for moving respective components in coordination.

Further, the exemplary method (300) includes at (312) moving the thrust reverse feature to a maximum position based on the thrust reverse feature coordination schedule and at (314) confirming the gas turbine engine condition is at a third value in coordination with moving the thrust reverser feature to the maximum position at (312). Notably, moving the thrust reverser feature to the maximum position at (312) may include moving the thrust reverser feature to the maximum position after confirming the gas turbine engine condition is at the second value at (310). Additionally, confirming the gas turbine engine condition is at the third value may include moving the gas turbine engine condition to the third value from the second value.

For example, in exemplary aspects wherein the gas turbine engine condition is a gas turbine engine speed, the first value may be a first gas turbine engine speed, the second value may be a second gas turbine engine speed, and the third value may be a third gas turbine engine speed. The first gas turbine engine speed may be greater than the second gas turbine engine speed, and the third gas turbine engine speed may be greater than the first and second gas turbine engine speeds, such that confirming the gas turbine engine condition at (310) includes decreasing the gas turbine engine speed from the first speed to the second speed and confirming the gas turbine engine condition at (314) includes increasing the gas turbine engine speed from the second speed to the third speed.

Additionally, or alternatively, wherein the gas turbine engine condition is a fan speed, the first value may be a first fan speed, the second value may be a second fan speed, and the third value may be a third fan speed. The first fan speed may be greater than the second fan speed, and the third fan speed may be greater than the first and second fan speeds, such that confirming the gas turbine engine condition at (310) includes decreasing the fan speed from the first speed to the second speed and confirming the gas turbine engine condition at (314) includes increasing the fan speed from the second speed to the third speed.

Additionally, or alternatively, wherein the gas turbine engine condition is a pitch angle of a plurality of fan blades of a fan of the gas turbine engine, the first value may be a first pitch angle, the second value may be a second pitch angle, and the third value may be a third pitch angle. The first pitch angle may be a pitch angle configured to generate forward thrust during operation. The second pitch angle should be less than the first pitch angle. For example, the second pitch angle should be at least less than zero degree. Additionally, the third pitch angle may be less than the second pitch angle, such as a pitch angle configured to generate a maximum amount of reverse thrust during operation. With such an exemplary embodiment, confirming the gas turbine engine condition is at a second value at (310) may include reducing the pitch angle from the first pitch angle to the second pitch angle, and similarly, confirming the gas turbine engine condition is at the third value at (314) may include reducing the pitch angle from the second value to the third value.

Moreover, in certain exemplary aspects, the method (300) may coordinate movement of the thrust reverser feature with a plurality of gas turbine engine conditions. For example, in certain exemplary aspects, the exemplary method (300) may additionally include confirming a second gas turbine engine condition is at a first value in coordination with confirming the first gas turbine engine condition is at the first value at (306). Similarly, in such an exemplary aspect, the exemplary method (300) may additionally include confirming the second gas turbine engine condition is at a second value in coordination with moving the thrust reverser feature to the middle position at (308) and in coordination with confirming the first gas turbine engine condition is at the second value at (310). As with the exemplary embodiment depicted in FIG. 5, moving the thrust reverser feature to the middle position at (308) may include moving the thrust reverser feature to the middle position after confirming the first gas turbine engine condition is at the first value and the second gas turbine engine condition is also the first value. Similarly, in such an exemplary aspect, confirming the second gas turbine engine condition is at the second value may be in coordination with moving the thrust reverser feature to the middle position.

Additionally, moving the thrust reverser feature to the maximum position may include moving the thrust reverser feature to the maximum position after confirming the first gas turbine engine condition is at the second value and after confirming the second gas turbine engine condition is a second value.

However, it should be appreciated, that although the exemplary aspect depicted in FIG. 5, and discussed above, includes moving the thrust reverse feature between three distinct positions, and coordinating such movement with various engine conditions, in other exemplary aspects, the thrust reverse feature may instead be moved between more than three distinct positions. For example, in other exemplary aspects, the thrust reverse feature may be moved between at least four positions, at least five positions, or between any other suitable number of positions. Additionally, in each of the above embodiments, movement of the various engine conditions may be coordinated with each of the distinct positions between which the thrust reverse features moved.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A method for controlling a gas turbine engine, the method comprising:
   receiving, with a controller, a thrust reverse command to activate a thrust reverse feature of the gas turbine engine;
   determining the thrust reverse feature is in a starting position;
   confirming a gas turbine engine condition is at a first value;
   moving the thrust reverse feature to a middle position based on a thrust reverse feature coordination schedule;
   confirming the gas turbine engine condition is at a second value in coordination with moving the thrust reverse feature to the middle position; and
   moving the thrust reverse feature to a maximum position based on the thrust reverse feature coordination schedule.
2. The method of clause 1, wherein moving the thrust reverse feature to the middle position includes moving the thrust reverse feature to the middle position after confirming the gas turbine engine condition is at the first value.
3. The method of any preceding clause, wherein moving the thrust reverse feature to the maximum position includes moving the thrust reverse feature to the maximum position after confirming the gas turbine engine condition is at the second value.
4. The method of any preceding clause, further comprising:
   confirming the gas turbine engine condition is at a third value in coordination with moving the thrust reverse feature to the maximum position.
5. The method of any preceding clause, wherein confirming the gas turbine engine condition is at the third value includes moving the gas turbine engine condition to the third value from the second value.
6. The method of any preceding clause, wherein the gas turbine engine condition is a gas turbine engine speed, wherein the first value is a first gas turbine engine speed, wherein the second value is a second gas turbine engine speed, wherein the third value is a third gas turbine engine speed, and wherein the third gas turbine engine speed is greater than first and second gas turbine engine speeds.
7. The method of any preceding clause, wherein the gas turbine engine comprises a fan, wherein the gas turbine engine condition is a fan speed, wherein the first value is a first fan speed, wherein the second value is a second fan speed, wherein the third value is a third fan speed, and wherein the third fan speed is greater than first and second fan speeds.
8. The method of any preceding clause, wherein confirming the gas turbine engine condition is at the first value includes moving the gas turbine engine condition to the first value.
9. The method of any preceding clause, wherein the gas turbine engine comprises a fan having a plurality of fan blades, wherein each of the plurality of fan blades defines a pitch angle, and wherein the gas turbine engine condition is a pitch angle of the plurality of fan blades.
10. The method of any preceding clause, wherein the first value of the gas turbine engine condition is a first pitch angle used for generating forward thrust greater than a pitch angle corresponding to a fine flight limit for the fan, and wherein the second blade pitch angle is less than the first pitch angle and less than zero degree.
11. The method of any preceding clause, wherein the gas turbine engine includes a fan and a core, and wherein the thrust reverse feature is configured to redirect a flow of air over or through at least one of the fan or the core.
12. The method of any preceding clause, wherein the gas turbine engine condition is a first gas turbine engine condition, and wherein the method further comprises
   confirming a second gas turbine engine condition is at a first value, wherein moving the thrust reverse feature to the middle position based on a thrust reverse feature coordination schedule includes moving the thrust reverse feature to the middle position after confirming the first gas turbine engine condition is at the first value and the second gas turbine engine condition is also at the first value; and
   confirming the second gas turbine engine condition is at a second value in coordination with moving the thrust reverse feature to the middle position, wherein moving the thrust reverse feature to the maximum position based on a thrust reverse feature coordination schedule includes moving the thrust reverse feature to the maximum position after confirming the first gas turbine engine condition is at the second value and after confirming the second gas turbine engine condition is at the second value.
13. The method of any preceding clause, wherein the first and second gas turbine engine conditions include at least two of a gas turbine engine speed, a fan speed, a pitch angle of a plurality of fan blades of a fan, and a power lever angle.
14. A gas turbine engine defining an axial direction, the gas turbine engine comprising:
   a core comprising a compressor and a turbine located downstream of the compressor;
   a thrust reverse feature defining a starting position, a middle position, and a maximum position, the thrust reverse feature configured for redirecting a flow of air through the core or around the core when in the maximum position; and
   a controller operably connected to the core and the thrust reverse feature, the controller configured to
   receive a thrust reverse command to activate the thrust reverse feature of the gas turbine engine;
   determine the thrust reverse feature is in the starting position;
   confirm a gas turbine engine condition is at a first value;
   move the thrust reverse feature to the middle position;
   confirm the gas turbine engine condition is at a second value in coordination with moving the thrust reverse feature to the middle position; and
   move the thrust reverse feature to the maximum position.
15. The gas turbine engine of any preceding clause, wherein the controller is configured to move the thrust reverse feature to the maximum position after moving the gas turbine engine condition to the second value.
16. The gas turbine engine of any preceding clause, wherein the controller is configured to move the thrust reverse feature to the middle position after confirming the gas turbine engine condition is at the first value.
17. The gas turbine engine of any preceding clause, wherein the controller is further configured to:
   confirm the gas turbine engine condition is at a third value in coordination with moving the thrust reverse feature to the maximum position.
18. The gas turbine engine of any preceding clause, wherein in confirming the gas turbine engine condition is at the third value, the controller is configured to move the gas turbine engine condition to the third value from the second value.#
19. The gas turbine engine of any preceding clause, wherein the core further comprises a shaft mechanically coupling the turbine to the compressor, wherein the shaft defines a gas turbine engine speed, wherein the gas turbine engine condition is the gas turbine engine speed, wherein the first value is a first gas turbine engine speed, wherein the second value is a second gas turbine engine speed, wherein the third value is a third gas turbine engine speed, and wherein the third gas turbine engine speed is greater than first and second gas turbine engine speeds.
20. The gas turbine engine of any preceding clause, further comprising:
   a fan mechanically coupled to the core, the fan comprising a plurality of fan blades each defining a pitch angle, wherein the gas turbine engine condition is at least one of a fan speed or the pitch angle of each of the plurality of fan blades.

## Claims

1. A method (300) for controlling a gas turbine engine (10), the method comprising:
receiving at (302), with a controller, a thrust reverse command to activate a thrust reverse feature (70) of the gas turbine engine;
determining at (304) the thrust reverse feature is in a starting position;
confirming at (306) a gas turbine engine condition is at a first value;
moving at (308) the thrust reverse feature to a middle position based on a thrust reverse feature coordination schedule;
confirming at (310) the gas turbine engine condition is at a second value in coordination with moving the thrust reverse feature to the middle position; and
moving at (312) the thrust reverse feature to a maximum position based on the thrust reverse feature coordination schedule.

2. The method (300) of claim 1, wherein moving the thrust reverse feature to the middle position at (308) includes moving the thrust reverse feature to the middle position after confirming the gas turbine engine condition is at the first value.

3. The method (300) of either of claim 1 or 2, wherein moving the thrust reverse feature to the maximum position at (312) includes moving the thrust reverse feature to the maximum position after confirming the gas turbine engine condition is at the second value.

4. The method (300) of any preceding claim, further comprising:
confirming at (314) the gas turbine engine condition is at a third value in coordination with moving the thrust reverse feature to the maximum position.

5. The method (300) of claim 4, wherein confirming the gas turbine engine condition is at the third value at (314) includes moving the gas turbine engine condition to the third value from the second value.

6. The method (300) of either of claim 4 or 5, wherein the gas turbine engine condition is a gas turbine engine speed, wherein the first value is a first gas turbine engine speed, wherein the second value is a second gas turbine engine speed, wherein the third value is a third gas turbine engine speed, and wherein the third gas turbine engine speed is greater than first and second gas turbine engine speeds.

7. The method (300) of either of claim 4 or 5, wherein the gas turbine engine comprises a fan, wherein the gas turbine engine condition is a fan speed, wherein the first value is a first fan speed, wherein the second value is a second fan speed, wherein the third value is a third fan speed, and wherein the third fan speed is greater than first and second fan speeds.

8. The method (300) of any preceding claim, wherein confirming the gas turbine engine condition is at the first value at (306) includes moving the gas turbine engine condition to the first value.

9. The method (300) of any preceding claim, wherein the gas turbine engine comprises a fan having a plurality of fan blades, wherein each of the plurality of fan blades defines a pitch angle, and wherein the gas turbine engine condition is a pitch angle of the plurality of fan blades.

10. The method (300) of claim 9, wherein the first value of the gas turbine engine condition is a first pitch angle used for generating forward thrust greater than a pitch angle corresponding to a fine flight limit for the fan, and wherein the second blade pitch angle is less than the first pitch angle and less than zero degree.

11. The method of any preceding claim, wherein the gas turbine engine condition is a first gas turbine engine condition, and wherein the method further comprises
confirming a second gas turbine engine condition is at a first value, wherein moving the thrust reverse feature to the middle position based on a thrust reverse feature coordination schedule includes moving the thrust reverse feature to the middle position after confirming the first gas turbine engine condition is at the first value and the second gas turbine engine condition is also at the first value; and
confirming the second gas turbine engine condition is at a second value in coordination with moving the thrust reverse feature to the middle position, wherein moving the thrust reverse feature to the maximum position based on a thrust reverse feature coordination schedule includes moving the thrust reverse feature to the maximum position after confirming the first gas turbine engine condition is at the second value and after confirming the second gas turbine engine condition is at the second value.

12. A gas turbine engine (10) defining an axial direction, the gas turbine engine comprising:
a core (16) comprising a compressor (24) and a turbine (28) located downstream of the compressor;
a thrust reverse feature (70) defining a starting position, a middle position, and a maximum position, the thrust reverse feature configured for redirecting a flow of air through the core or around the core when in the maximum position; and
a controller operably connected to the core and the thrust reverse feature, the controller configured to
receive (302) a thrust reverse command to activate the thrust reverse feature of the gas turbine engine;
determine (304) the thrust reverse feature is in the starting position;
confirm (306) a gas turbine engine condition is at a first value;
move (308) the thrust reverse feature to the middle position;
confirm (310) the gas turbine engine condition is at a second value in coordination with moving the thrust reverse feature to the middle position; and
move (312) the thrust reverse feature to the maximum position.

13. The gas turbine engine (10) of claim 12, wherein the controller is configured to move the thrust reverse feature to the maximum position after moving the gas turbine engine condition to the second value.

14. The gas turbine engine (10) of either of claim 12 or 13, wherein the controller is configured to move the thrust reverse feature to the middle position after confirming the gas turbine engine condition is at the first value.

15. The gas turbine engine (10) of any of claims 12 to 14, wherein the controller is further configured to:
confirm the gas turbine engine condition is at a third value in coordination with moving the thrust reverse feature to the maximum position.
